# EUROPÄISCHE PATENTSCHRIFT

(11) **EP 0 458 817 B1**
(45) Veröffentlichungstag und Bekanntmachung des Hinweises auf die Patenterteilung: **22.12.1993**
(21) Anmeldenummer: 90902761.7
(22) Anmeldetag: 12.02.1990
(51) Int. Cl.: H01M 6/26, F16N 11/10, C01B 3/04

(54) **Schmierstoffgeber mit einer aus Anode, Kathode und Elektrolyten bestehenden galvanischen Zelle zur Erzeugen von Gasen**
Lubricant dispenser with a galvanic cell consisting of anode, cathode and electrolyte for the production of gases
Dispensateur des lubrifiants pour une cellule galvanique consistant dans anode, cathode et électrolyte pour la production des gazes

(30) Priorität: 16.02.1989 DE 3904688; 13.01.1990 DE 4000811
(43) Veröffentlichungstag der Anmeldung: 04.12.1991
(73) Patentinhaber: Satzinger GmbH & Co., 97717 Euerdorf (DE)
(72) Erfinder: JORISSEN, Bernd, D-8737 Euerdorf (DE)
(74) Vertreter: Andrejewski, Walter
(86) Internationale Anmeldenummer: DE9000088
(87) Internationale Veröffentlichungsnummer: WO9009685

(56) Entgegenhaltungen:
- WO-A-88/04750
- DE-A- 918 454
- DE-A- 2 819 117
- DE-C- 23 994
- FR-A- 663 784
- FR-A- 2 315 774
- US-A- 3 976 509
- US-A- 4 024 322
- US-A- 4 095 015
- US-A- 4 561 948
- US-A- 4 652 503

## Beschreibung

Die vorliegende Erfindung betrifft einen Schmierstoffgeber mit einer aus Anode, Kathode und Elektrolyten bestehenden galvanischen Zelle für die Erzeugung von Gas, welches den Schmierstoff aus einem Vorratsbehälter herausdrückt.

Durch WO-A-88/04750 ist eine Einrichtung zur elektrochemischen Erzeugung von Gasen zum Transport von fluiden Medien wie z. B. Schmierstoffen bekannt, die eine aus Kathode, Anode und einen wäßrigen Elektrolyten aufnehmendem Gehäuse bestehende galvanische Zelle aufweist, in der durch Schließen eines äußeren Stromkreises ein Strom fließt, durch welchen eine dem Stromfluß entsprechende Menge an Gas erzeugt wird. Dieses Gas dient zur Bedrückung eines Kolbens oder Trenneinsatzes, der aus einem Vorratsbebälter Schmierstoff in eine Lagerstelle oder dgl. drückt. Bei diesem bekanntem Schmierstoffgeber wird ein alkalischer Elektrolyt verwendet.

Zum Zwecke der Gas- bzw. Stromerzeugung ist die anodische Auflösung von Metallen mit negativem Potential, vorzugsweise Zink, in geeigneten Elektrolyten und kathodischen Reaktionen bekannt. Als Elektrolyten gelangen starke alkalische Lösungen von Metallhydroxiden der ersten Hauptgruppe zur Anwendung.

Zur Metallzersetzung wird die Hydroxydkomplexbildung ausgenutzt. Die zum Einsatz kommenden alkalischen Elektrolyte sind aggressiv und eiweißzersetzend. Bei Berührung mit der Haut oder anderen Körperpartien entstehen langwierige schwere Verätzungen durch die Depolarisation von Eiweißen (alkalische Hydrolyse). Die Benetzung der Augen mit solchen Elektrolyten kann, wenn nicht sofort eine ärztliche Behandlung eingeleitet wird, zum Verlust des Augenlichtes führen.

Zum Einsatz können auch alkalische Amin- oder Aminosalze einfacher organischer oder anorganischer Säuren kommen. Bei der Metallzersetzung werden dann Amin- bzw. Ammoniumkomplexe gebildet. Hierbei ist die Reproduzierbarkeit der Wasserstofferzeugung ungenugend. Auch entstehen bei der Verwendung von Aminosalzen größtenteils giftige Reaktionsprodukte.

Als weitere Möglichkeit ist die Elektrolyse mit sauren Lösungen bekannt. Bei einem niedrigen pH-Wert (unter 2) verläuft die Gasentwicklung jedoch sehr stürmisch. Es bilden sich viele aktive Zentren auf der Zinkoberfläche. Geringste Anfangsunterschiede in der Kristallstruktur des Zinks oder Verunreinigungen wirken sich sehr stark aus. Die Gaserzeugung kann dabei entweder gehemmt (Bildung von Überzügen) oder auch beschleunigt (Bildung von aktiven Zentren) werden. Dadurch ist die Gaserzeugung nicht reproduzierbar. Bei einem pH-Wert von über 2 fällt der Verbrauch an Säure durch das gering vorhandende Volumen stark ins Gewicht, d.h. die Menge des Elektrolyten muß möglichst groß gewählt werden, damit sich die Veränderung des pH-Wertes nur minimal auswirkt. In den meisten Fällen ist es jedoch nicht möglich, entsprechend große Elektrolytmengen in den galvanischen Zellen unterzubringen.

Aufgabe der vorliegenden Erfindung ist es, einen Schmierstoffgeber mit einem Elektrolyten für galvanische Zellen zur Erzeugung von Gasen zu schaffen, der physiologisch unbedenklich und dessen Gefährdungspotential minimal ist; dessen pH-Wert nahe dem Neutralpunkt liegt, und bei dem die Gasentwicklung in ausreichenden Grenzen reproduzier- und steuerbar ist.

Gelöst wird diese Aufgabe nach der vorliegenden Erfindung durch einen Elektrolyten, der aus einer Mischung besteht, die neben Komplexbildnern aus polyfunktionellen, stickstoffhaltigen Carbonsäuren, mehrbasige anorganische Säuren oder ein- oder mehrbasige organische Säuren und deren Salze aufweist und mehrwertige Alkohole, vorzugsweise Glycerin, als gefrierpunktserniedrigende Zusätze enthalten kann.

Nach weiteren Merkmalen der Erfindung sind ein- und mehrbasige Säuren, die gleichzeitig starke Komplexbildungseigenschaften besitzen, geeignet; vorzugsweise Phosporsäure, Borsäure, Essig-, Oxal-, Zitronen, Wein-, Apfel-, Milchsäure.
Gemäß weiteren Merkmalen der Erfindung können Kombinationen von mehrbasigen Säuren mit organischen polyfunktionellen stickstoffhaltigen Carbonsäuren, wie z. B. Äthylendiamintetraessigsäure (EDTA) oder Nitrilotriessigsäure (NTA) verwendet werden. Diese Kombinationen gewährleisten eine reproduzierbare kathodische Gaserzeugung bei einem pH-Wert zwischen 3 und 10, vorzugsweise zwischen 4,5 und 8,5.

Allen diesen genannten Säuren ist gemeinsam, daß sie physiologisch unbedenklicher sind als die üblicherweise in den galvanischen Zellen verwendeten Elektrolyte. Der Komplexbildner ist nach weitern Merkmalen der Erfindung so auszuwählen, daß für die in Frage kommenden Metallionen, die kathodisch zu einer Vergiftung führen können, eine möglichst große Dissoziationskonstante besteht. Durch die Wahl des geeeigneten Komplexbildners wird nach einem weiteren Merkmal der Erfindung die kathodische Metallionenablagerung in gewisse Grenzen durch Maskierung der kathodisch störenden Metalle verhindert und somit die Wasserstoffüberspannung und die Oberflächenbedeckung durch Metalle aus der Lösung auf einem konstanten Niveau gehalten, wodurch die erzeugt Gasmenge pro Zeiteinheit konstant bleibt.

Mit dem richtigen Komplexbildner läßt sich auch die Gasmenge pro kathodischer Flächeneinheit in ausreichendem Maße reproduzieren sowie vorbestimmen.

Als geeigneter Komplexbildner wurde Äthylendiamintetraessigsäure (EDTA), ihr Dinatriumsalz oder Nitrilotriessigsäure (NTA) gefunden.

Nach einem weiteren Merkmal der Erfindung bildet der Elektrolyt eine Pufferlösung, die vorzugsweise einen pH-Wert zwischen 3 und 10 hat. Die Menge der Pufferlösung wird so gewählt, daß sich während der Gaserzeugung der pH-Wert nicht verändert. Eine geeignete Pufferlösung besteht aus Weinsäure und Natriumtatrat. Nach einem weiteren Merkmal der Erfindung sind anstelle von Wasser nichtwässrige Lösungsmittel einsetzbar, wie Z. B. Alkohole, Dimetbylformamid (DMF), Dimethylsulfoxid (DMSO), Säurehydride, zyklische Äther, Amine usw.

Ist der Gefrierpunkt der Lösung nicht ausreichend tief, so kann dieser nach weiteren Merkmalen der Erfindung mit entsprechenden Gefrierpunktserniedrigern abgesenkt werden. Es sind jedoch vorzugsweise solche zu verwenden, die die Komplexbildung unterstützen und die Wasserstoff-Überspannung stabilisieren. Glycerin erfüllt nach einem Merkmal der Erfindung im ausreichenden Maße diese Bedingungen.

Als ein Beispiel für einen geeigneten Elektrolyten im Schmierstoffgeber gemäß der vorliegenden Erfindung ist eine Kombination aus 100 g Weinsäure, 10 g NaOH, 300 g Glycerin, 200 g ETDA-Dinatriumsalz, die mit Wasser auf 1000 g aufgefüllt werden, anzusehen.

## Patentansprüche

1. Schmierstoffgeber mit einer aus Anode, Kathode und Elektrolyten bestehenden galvanischen Zelle zur Erzeugung von Gas, das den Schmierstoff aus einem Vorratsbebälter ausdrückt, dadurch gekennzeichnet, daß der Elektrolyt aus einer Mischung besteht, die neben Komplexbildnern aus polyfunktionellen, stickstoffhaltigen Carbonsäuren, mehrbasige anorganische Säuren oder ein- oder mehrbasige organische Säuren und deren Salze aufweist, und mehrwertige Alkohole, vorzugsweise Glycerin, als gefrierpunktserniedrigende Zusätze enthalten kann.

2. Schmierstoffgeber nach Anspruch 1, gekennzeichnet durch die Verwendung von geeigneten ein- oder mehrbasigen Säuren, die gleichzeitig starke Komplexbildungseigenschaften besitzen.

3. Schmierstoffgeber nach Anspruch 1 und 2, gekennzeichnet durch die Verwendung von Phosphor- oder Borsäure als anorganische Säure.

4. Schmierstoffgeber nach Anspruch 1 und 2, gekennzeichnet durch die Verwendung einbasiger Oxosäuren oder mehrbasigen Hydroxysäuren, vorzugsweise Milchsäure, Apfel-, Wein- oder Zitronensäure.

5. Schmierstoffgeber nach Anspruch 1 und 2, gekennzeichnet durch die Verwendung von Oxalsäure als mehrbasige organische Säure.

6. Schmierstoffgeber nach einem der Ansprüche 1 bis 5, gekennzeichnet durch die Verwendung von Äthylendiamintetraessigsäure (EDTA) oder ihrem Dinatriumsalz als Komplex- oder Chelatkomplexbildner.

7. Schmierstoffgeber nach einem der Ansprüche 1 bis 5, gekennzeichnet durch die Verwendung von Nitrilotriessigsäure (NTA) als Komplex- oder Chelatkomplexbildner.

8. Schmierstoffgeber nach einem der Ansprüche 1 bis 7, gekennzeichnet durch die Verwendung von Säuren und deren Salzen, wobei die Säure- /Salzkonzentraton so ist, daß die Pufferkapazität nahe dem Neutralpunkt maximal ist.

9. Schmierstoffgeber nach Anpruch 8, gekennzeichnet durch die Abpufferung des Elektrolyten, wobei der Elektrolyt vorzugsweise einen pH-Wert zwischen 3 und 10 hat, vorzugsweise zwischen 4,5 und 8,5.

10. Schmierstoffgeber nach einem der Ansprüche 1 bis 9 dadurch gekennzeichnet, daß anstelle von Wasser, andere geeignete nichtwässrige Lösungsmittel, wie Alkohole, Dimethylformamid (DMF), Dimethylsulfoxid (DMSO), Säurehydride, zyklische Äther, usw. zur Anwendung kommen.

## Claims

1. A lubricant dispenser with a galvanic cell, comprising anode, cathode and electrolyte, for the production of gas which expels the lubricant from a reservoir, characterised in that the electrolyte consists of a mixture which, in addition to complexing agents of polyfunctional nitrogenous carboxylic acids, has polybasic inorganic acids or mono or polybasic organic acids and the salts thereof, and can contain polyvalent alcohols, preferably glycerine, as additives which lower the freezing point.

2. A lubricant dispenser according to Claim 1, characterised by the use of suitable mono or polybasic acids which at the same time possess strong complexing properties.

3. A lubricant dispenser according to Claim 1 or 2, characterised by the use of phosphoric acid or boric acid as the inorganic acid.

4. A lubricant dispenser according to Claim 1 or 2, characterised by the use of monobasic oxo acids or polybasic hydroxy acids, preferably lactic acid, malic, tartaric or citric acid.

5. A lubricant dispenser according to Claim 1 or 2, characterised by the use of oxalic acid as the polybasic organic acid.

6. A lubricant dispenser according to any one of Claims 1 to 5, characterised by the use of ethylene diamine tetra-acetic acid (EDTA) or its disodium salt as complexing agent or chelating agent.

7. A lubricant dispenser according to any one of Claims 1 to 5, characterised by the use of nitrilo-triacetic acid (NTA) as complexing agent or chelating agent.

8. A lubricant dispenser according to any one of Claims 1 to 7, characterised by the use of acids and their salts, wherein the acid/salt concentration is such that the buffering capacity is at maximum near to the point of neutrality.

9. A lubricant dispenser according to Claim 8, characterised by the buffering of the electrolyte, wherein the electrolyte preferably has a pH value of between 3 and 10, preferably between 4.5 and 8.5.

10. A lubricant dispenser according to any one of Claims 1 to 9, characterised in that, instead of water, other suitable non-aqueous solvents are used, such as alcohols, dimethyl formamide (DMF), dimethyl sulphoxide (DMSO), acid hydrides, cyclic ether, etc.

## Revendications

1. Distributeur de lubrifiants à cellule galvanique, composée d'une anode, d'une cathode et d'un électrolyte, pour la production de gaz; qui expulse le lubrifiant d'un réservoir de stockage, caractérisé en ce que l'électrolyte consiste en un mélange qui, outre des formateurs de complexes d'acides carboniques polyfonctionnels à teneur en azote, présente des acides inorganiques polybasiques ou des acides organiques mono- ou polybasiques et leurs sels et peut contenir, comme adjuvants abaissant le point de congélation, des alcools polyvalents, de préférence de la glycérine.

2. Distributeur de lubrifiants suivant la revendication 1, caractérisé par l'utilisation d'acides mono- ou polybasiques appropriés qui possèdent en même temps des propriétés développées de formation de complexes.

3. Distributeur de lubrifiants suivant la revendication 1 et 2, caractérisé par l'utilisation d'acide phosphorique ou borique comme acide inorganique.

4. Distributeur de lubrifiants suivant la revendication 1 et 2, caractérisé par l'utilisation d'oxy-acides monobasiques ou d'hydroxy-acides polybasiques, de préférence acide lactique, acide malique, tartrique ou citrique.

5. Distributeur de lubrifiants suivant la revendication 1 et 2, caractérisé par l'utilisation d'acide oxalique comme acide organique polybasique.

6. Distributeur de lubrifiants suivant l'une des revendications 1 à 5, caractérisé par l'utilisation d'acide éthylénediaminetétraacétique (EDTA) ou son sel de disodium comme formateur de complexes ou de complexes chélatés.

7. Distributeur de lubrifiants suivant l'une des revendications 1 à 5, caractérisé par l'utilisation d'acide nitrilotriacétique (NTA) comme formateur de complexes ou de complexes chélatés.

8. Distributeur de lubrifiants suivant l'une des revendications 1 à 7, caractérisé par l'utilisation d'acides et leurs sels, la concentration d'acide/sel étant telle que la capacité de régulation est maximale prés du point neutre.

9. Distributeur de lubrifiants suivant la revendication 8, caractérisé par la régulation de l'électrolyte, l'électrolyte ayant, de préférence, une valeur de pH comprise entre 3 et 10, de préférence entre 4,5 et 8,5.

10. Distributeur de lubrifiants suivant l'une des revendications 1 à 9, caractérisé en ce qu'au lieu d'eau, on peut utiliser d'autres solvants non-aqueux appropriés, tels qu'alcools, diméthylformamide (DMF), diméthylsulfoxyde (DMSO), hydrides acides, éthers cycliques, etc.
